Europäisches Patentamt

European Patent Office

Office européen des brevets

(19)

(11) **EP 0 880 016 A1**

(12) **EUROPÄISCHE PATENTANMELDUNG**

(43) Veröffentlichungstag:
   **25.11.1998 Patentblatt 1998/48**

(51) Int. Cl.⁶: $G01J\ 5/60$

(21) Anmeldenummer: **98108737.2**

(22) Anmeldetag: **14.05.1998**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **23.05.1997 DE 19721475**

(71) Anmelder: **EKO Stahl GmbH**
   **15890 Eisenhüttenstadt (DE)**

(72) Erfinder:
   • **Casajus, Alvaro, Dr.**
    **15232 Frankfurt (Oder) (DE)**
   • **Foerster, Peter**
    **15890 Eisenhüttenstadt (DE)**

(74) Vertreter: **Wenzel, Klaus**
   **EKO Stahl GmbH,**
   **Werkstrasse 1**
   **15890 Eisenhüttenstadt (DE)**

(54) **Verfahren zur berührungslosen Temperaturmessung**

(57)   Die Erfindung betrifft ein Verfahren zur berührungslosen Temperaturmessung an technischen Oberflächen durch Messung der von den Flächen ausgehenden Infrarotstrahlung.

   Das erfindungsgemäße Verfahren ist gekennzeichnet durch folgende Verfahrensschritte:

a) Messen der von der eines Meßkörpers emittierten Strahlendichte mit einem IR-Fourier-Spektrometer

b) Ermitteln der Verteilung der Intensität der emittierten Strahlung über die Wellenlänge

c) Bestimmen des Maximums der Intensitätsverteilung mit Hilfe eines Regressionsverfahrens

d) Ermitteln der Temperatur der Oberfläche des Meßkörpers unter Anwendung des Wienschen Verschiebungsgesetzes

Fig. 1

EP 0 880 016 A1

**Beschreibung**

Die Erfindung betrifft ein Verfahren zur berührungslosen Temperaturmessung an technischen Oberflächen durch Messung der von den Flächen ausgehenden Infrarotstrahlung.

Grundlage aller Temperaturmessungen strahlungsemittierender Körper ist das Plancksche Strahlungsgesetz für die spektrale Strahldichte $L_s(\lambda,T)$ des schwarzen Körpers

$$L_s(\lambda,T) = \frac{2C_1}{\Omega_o \lambda^5 \left[\exp\frac{C_2}{\lambda T} - 1\right]} \tag{1}$$

$$C_1 = c_o^2 h = 5,95 \cdot 10^{-17} \, Wm^2$$
$$C_2 = c_o h/k = 1,438 \cdot 10^{-2} \, m°K$$
$$\Omega_o = 1 \, sr.$$

$c_o$      Lichtgeschwindigkeit im Vakuum
h      Plancksches Wirkungsquantum
k      Boltzmannsche Konstante

auf die die Strahldichte eines beliebigen Körpers $L(\lambda,T)$ zurückgeführt wird, gemäß dem Kirchhoffschen Gesetz

$$L(\lambda,T) = \varepsilon(\lambda,T)^* L_s(\lambda,T). \tag{2}$$

$\varepsilon(\lambda,T)$ wird als Emissionskoeffizient oder Emissionsgrad bezeichnet und stellt das Verhältnis der Spektraldichte eines beliebigen strahlenden Körpers zur Spektraldichte des schwarzen Körpers in Abhängigkeit von der Temperatur und Wellenlänge dar.

Definitionsgemäß ist $\varepsilon(\lambda,T) < 1$, wobei i.a. die Abhängigkeit von der Wellenlänge und der Temperatur gering oder gar Null ist, so daß man $\varepsilon$ auch eine spezifische Stoffkonstante bezeichnen kann.

Die genaue Kenntnis des Emissionsgrades ist eine wesentliche Voraussetzung zur korrekten Messung der Temperatur strahlender Körper mittels Strahlungsempfängern. In den meisten Fällen werden Pyrometer eingesetzt.

Der Emissionskoeffizient wird an idealen Flächen gemessen, die chemisch rein und in ihrer stöchiometrischen Zusammensetzung konstant sind und eine gegenüber der Wellenlänge der Strahlung vernachlässigbare Rauhigkeit besitzen.

Technische Oberflächen weisen einen mitunter erheblichen Mittenrauheitswert $R_a$ auf, der zu eine Streuung und demzufolge Schwächung der am Empfänger einfallenden Strahlung führt.

Sie sind selten chemisch rein und ihre stöchiometrische Zusammensetzung kann sich während des technologischen Prozesses ändern, wie es z.B. bei der Herstellung von galvannealtem Stahlband der Fall ist, was zu eine Veränderung des Emissionsgrades führt.

Somit ist der Emissionsgrad technischer Oberflächen $\varepsilon_o = (\lambda, T, R_a, \Sigma c_i)$ über die bekannten Abhängigkeiten der Wellenlänge und Temperatur hinaus eine Funktion der durch den Mittenrauheitswert $R_a$ charakterisierten Rauhigkeit und der stöchiometrischen Zusammensetzung $\Sigma c_i$.

Beim Einsatz eines Gesamtstrahlungspyrometers, das die Energiestromdichte $M(T, R_a, \Sigma c_i)$ nach dem Stefan-Boltzmann-Gesetz mißt, das aus der Integration des Planckschen Strahlungsgesetzes über die Wellenlänge und dem Halbraum hervorgeht, erhält man für technische Oberflächen

$$M(T, R_a, \Sigma c_i) = \varepsilon_o\text{'} (R_a, \Sigma c_i) \cdot \sigma \cdot T^4. \tag{3}$$

$$\sigma = 2 C_1 \pi^5 / 15 C_2^4 = 5,667 \cdot 10^{-8} \, Wm^{-2} \, °K^{-4}$$

Dabei wurde angenommen, daß $\varepsilon_o\text{'}(R_a, \Sigma c_i) \approx \varepsilon_o (\lambda, T, R_a, \Sigma c_i)$ ist.

Bei nicht genau bekanntem Emissionskoeffizienten $\varepsilon_o\text{'} (R_a, \Sigma c_i)$ kann beim Einsatz eines Meßverfahrens nach Gl. 3 ein erheblicher Fehler bei der Temperaturmessung entstehen.

Das gleiche Problem bleibt beim Einsatz von Breitband- oder Schmalbandpyrometer weiterhin bestehen, da der Emissionskoeffizient in allen Fällen stets als vorgeschaltete Konstante in die Bestimmung der Energiestromdichte eingeht.

Bei den bekannten Verfahren wird das Problem dadurch gelöst, daß eine Messung der Strahlungsdichte durch geeignete Filtermaßnahmen in zwei getrennten Wellenlängenbereichen schmalbandig erfolgt. Diese Meßstrategie wird in dem sogenannten Verhältnis- oder Quotientenpyrometer verwirklicht.

Bei geringer Abhängigkeit des Emissionskoeffizienten von $\lambda$ hängt das Strahlenverhältnis $R(\lambda_1/\lambda_2)$ nur noch von der Temperatur T und vom dem Verhältnis der verwendeten Wellenlängenbereiche ab, gemäß Gleichung (4)

$$R(\lambda_1/\lambda_2) = a_o{}^5 \cdot \exp\left[\frac{C_2}{\lambda_1 T}\left(\frac{1}{a_o} - 1\right)\right] \tag{4}$$

$$a_o = \lambda_2/\lambda_1$$

$\lambda_1$, $\lambda_2$ sind die charakteristischen Wellenlängen des Verhältnispyrometers.

Die Aussage ob $\varepsilon_o(\lambda, T, R_a, \Sigma c_i) \approx \varepsilon_o{}'(R_a, \Sigma c_i)$ ist, kann mit dem Verhältnispyrometer nicht gewonnen werden, so daß stets ein unbekannter Fehler die Messung belastet.

Verhältnis- bzw. Quotientenpyrometer weisen eine Reihe von Nachteilen auf.

Durch die Schmalbandigkeit bedingt, sind die in beiden Wellenlängenbereichen gemessenen Intensitäten sehr niedrig, so daß bei der Bildung des Quotienten im Analogrechner bereits geringe Fehler bei der Intensitätsmessung grobe Fehler bei der Bestimmung der Temperatur zur Folge haben.

Meßtechnisch besteht das Problem zwei unabhängige Messungen am gleichen Probenort unter gleichen Bedingungen durchzuführen und identisch auszuwerten.

Auf Grund der besprochenen geringen Intensitäten, werden erhebliche Anforderungen an die Identität beider Meßkanäle gestellt, die in der Praxis nicht oder nur näherungsweise erfüllt werden.

Aus DE OS 20 61 463 ist ein Verfahren bekannt geworden, bei dem die Intensitäten beider Wellenlängenbereiche nacheinander einem einzigen Meß- und Auswertekanal zugeführt werden.

Dabei befinden sich die entsprechenden Bandfilter auf einer rotierenden Scheibe vor dem Strahlungsdetektor.

Dazu ist jedoch eine komplizierte exakt arbeitende mechanische optische Vorrichtung erforderlich.

Das Problem der geringen Intensität des Bandfilters wurde in der Schritt DE OS 36 34 800 dadurch umgangen, daß sogenannte Kurz- oder Langpaßfilter verwendet werden, die einen größeren Bereich des Spektrums durchlassen. Durch die Verwendung mehrerer Kurz- oder Langpaßfilter mit unterschiedlicher Absorptionskante werden zwei oder mehrere sich teilweise überlappenden Wellenlängenbereiche erzeugt. Damit erhält man zwar zwei Meßwerte, die jedoch nicht voneinander unabhängig sind.

Bei einer Aufnahme der Intensität über einen längeren Wellenlängenbereich macht sich die Wellenlängenabhängigkeit des Emissionskoeffizienten wesentlich stärker bemerkbar als bei den Schmalbandpyrometern.

In der Schritt EP 0 592 361 A1 wird versucht, diese Unzulänglichkeit durch die Einführung eines funktionellen Zusammenhanges zwischen $\varepsilon(\lambda_1, T)$ und $\varepsilon(\lambda_2, T)$ zu umgehen.

Auf Grund des monotonen Verlaufs des Strahlungsprofils insbesondere bei Temperaturen unter 1000 °K wird jede Annahme über den ebenfalls monotonen Verlauf der Abhängigkeit von $\varepsilon = \varepsilon(\lambda, T)$ hinreichend mit den Messungen korreliert werden können, wobei jeder Ansatz einen anderen Wert für die Strahlungstemperatur liefert.

Das führt dahin, daß in dieser Veröffentlichung nicht weniger als acht Ansätze in Betracht gezogen wurden.

Nur die Betrachtung des gesamten Strahlungsprofils oder des Strahlungsprofils innerhalb eines durch das optimale Signal-Rauschverhältnis bestimmten Wellenlängenbereiches, kann die Information über den Emissionskoeffizienten $\varepsilon = \varepsilon(\lambda, T)$ aus der Beziehung

$$\varepsilon(\lambda, T) = L(\lambda, T)/L_s(\lambda, T) \tag{5}$$

gewonnen werden, wobei $L(\lambda, T)$ die gemessene Intensität und $L_s(\lambda, T)$ die Intensität des schwarzen Strahlers ist .

Aus der Abweichung des gemessenen Profils $L(\lambda, T)$ von dem Profil des schwarzen Strahlers $L(\lambda, T)$ wird durch ein Iterationsverfahren die Wellenlängenabhängigkeit des Emissionskoeffizienten gewonnen.

Aus der Vielfalt der in Betracht gezogenen mathematischen Ansätze für die Abhängigkeit des Emissionskoeffizienten von der Wellenlänge geht hervor, daß ein eindeutiges physikalisch begründetes Vorgehen nicht möglich ist, wodurch das Ergebnis stets mehrdeutig ist.

Führen die Verunreinigungen auf den technischen Oberflächen zu einer Absorption in dem einen oder dem anderen Wellenlängenbereich oder zu einer unterschiedlichen Absorption in beiden Wellenlängenbereichen, so tritt ebenfalls eine nicht mehr nachvollziehbare Verfälschung der Quotientenbildung und somit der Temperaturbestimmung auf.

Hier liegt ein wesentlicher Nachteil des Verfahrens.

Aufgabe der Erfindung ist es, ein Verfahren zur berührungslosen Temperaturmessung an technischen Oberflächen durch Messung der von den Oberflächen ausgehenden Infrarotstrahlung zu finden mit dem der parasitäre Anteil der Streuung und Absorption der von den Flächen ausgehenden Strahlung und ihr negativer Einfluß auf das Meßergebnis vermieden und eine korrekte und schnelle Meßwertverarbeitung zur Ermittlung der wahren Temperatur einer Oberfläche ermöglicht wird.

Erfindungsgemäß wird die Aufgabe gemäß den Ansprüchen 1 bis 4 gelöst.

Bei Anwendung des erfindungsgemäßen Verfahrens ergeben sich folgende Vorteile

- Das Temperaturprofil einer technischen Oberfläche ist gleich dem Produkt des Emissionskoeffizienten der realen Oberfläche und dem Temperaturprofil des schwarzen Körpers.
  Durch die Aufnahme des gesamten Temperaturprofiles in einem Meßvorgang kann ohne Schwierigkeit der Verlauf des Emissionskoeffizienten der realen Oberfläche von dem Temperatuprofil des schwarzen Körpers absepariert werden und somit die wahre Temperatur ermittelt werden.

- Aus dem charakteristischen Verlauf von Absorptionsbanden können diese vom Temperaturprofil abgetrennt werden, wodurch eine Verfälschung der Temperaturbestimmung wie im Falle eines Quotientenverfahrens vermieden wird.

- Gleichzeitig wird eine spektroskopische Indentifizierung der auftretenden Verunreinigungen möglich (z.B. Oxidation der Oberfläche durch Lufteinbruch. Verkohlung)

Das erfindungsgemäße Verfahren soll nachfolgend an einem Beispiel zur berührungslosen Temperaturmessung von erwärmten metallischen Band an einer kontinuierlich arbeitenden Bandverzinkungsanlage näher beschrieben werden.

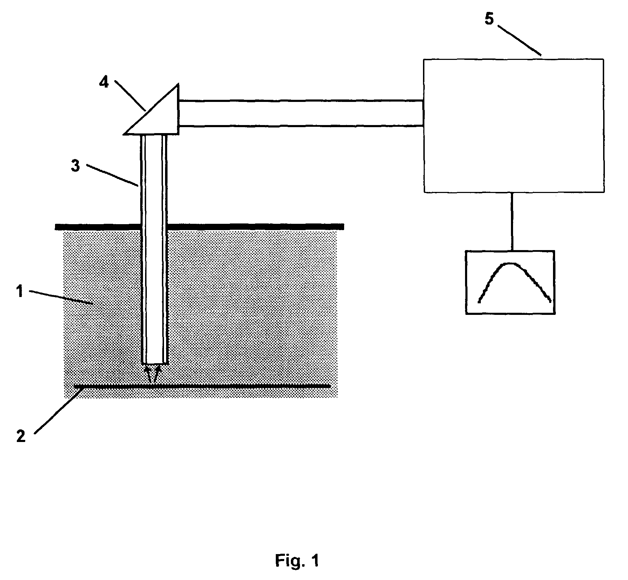

In Fig. 1 ist dazu eine entsprechende Meßeinrichtung dargestellt.

Zur Einstellung von optimalen Bedingungen für das Verzinken von Stahlband in einer entsprechenden Bandverzinkungsanlage ist neben den Anforderungen an einer einwandfreien Oberfläche des Materials die genaue Einhaltung einer definierten Temperatur des zu beschichtenden Bandes am Ausgang eines Erwärmungsofens erforderlich.

Dazu ist es notwendig eine geeignete Meßeinrichtung am Ausgang des Erwärmungsofens zu installieren, um die für das erfindungsgemäße Verfahren erforderliche Messung des erwärmten Bandes mit hoher Genauigkeit zu ermöglichen und gleichzeitig durch Rückkopplung zum Leistungsregler des Ofens die zur Erreichung der geforderten Bandtemperatur notwendige Wärmeleistung einzustellen.

Die Meßeinrichtung besteht aus ein in den Erwärmungsofen 1 hineinragendes doppelwandiges wassergekühltes Rohr 3 dessen Längsachse senkrecht zur Oberfläche des erwärmten Bandes 2 angeordnet ist.

Die vom Band 2 ausgehende und vom Rohr 3 gegenüber Fremdanteile abgeschirmte Wärmestrahlung trifft außerhalb des Ofenraumes 1 auf einen wassergekühlten Kupferspiegel 4, der die von der Oberfläche des Bandes 2 emittierte Strahlung auf ein Spektrometer 5 reflektiert.

Als Spektrometer wird ein IR-Fourierspektrometer verwendet, welches eine rasche Auswertung der ankommenden Strahlung ermöglicht.

Die Meßeinrichtung gewährleistet durch die Anordnung des wassergekühlten Rohres 3 bis unmittelbar über der Oberfläche des Bandes 2 sowie des wassergekühlten Kupferspiegels 4 eine unverfälschte Aufnahme der von der Bandoberfläche ausgehenden Strahlung.

Das Fourierspektrometer ermittelt schließlich den Intensitätsverlauf aus der Fouriertransformation der aufgenommenen Meßgröße.

Durch ein geeignetes mathematisches Verfahren wird das Maximum der Intensität bestimmt. Seine Lage wird für $T < 3000\ °K$ durch das Wiensche Verschiebungsgesetz in guter Näherung beschrieben (Gleichung (5))

$$\lambda_m \cdot T = C_2/4{,}9651 = 2896\ \mu m\ °K \tag{5}$$

Als mathematisches Verfahren kann z.B. ein Regressionsverfahren mit einem Polynom n-ten Grades verwendet mit dem der Verlauf der Intensität angenähert wird, gemäß

$$L(\lambda,T) = a_o(T) + a_1(T)^* \lambda + a_2(T)^* \lambda^2 + \ldots\ldots + a_n(T)^* \lambda^n \tag{6}$$

Durch Bildung der ersten Ableitung und Nullung wird der Wert für $\lambda_m$ ermittelt.

Bedingt durch die Spezifik des angewandten Verfahrens wird stets mit der gesamten einfallenden Intensität gearbeitet, so daß die Nachteile schmalbandiger Pyrometer und die daraus resultierenden Probleme bei der korrekten Signalverarbeitung schwacher Signale und Temperaturbestimmung entfallen.

Darüber hinaus wird gleichzeitig eine chemische Spektralanalyse der Oberflächenbelegung realisiert, bei der die Oberfläche selbst als Strahlquelle fungiert.

Da das gesamte Spektrum aufgenommen wird, ist eine Trennung der chemischen Absorptionsbanden sowie ihre Identifikation von der nach Gleichung (1) bestimmten Quellenstrahlung gegeben.

**Patentansprüche**

1. Verfahren zur berührungslosen Temperaturmessung an technischen Oberflächen, insbesondere metallischen Oberflächen, durch Messung der von den Flächen ausgehenden Infrarotstrahlung gekennzeichnet durch folgende Verfahrensschritte

   a) Messen der von der Oberfläche eines Meßkörpers emittierten Strahlendichte mit einem IR-Fourier-Spektrometer

   b) Ermitteln der Verteilung der Intensität der emittierten Strahlung über die Wellenlänge

   c) Bestimmen des Maximums der Intensitätsverteilung mit Hilfe eines Regressionsverfahrens

   d) Ermitteln der Temperatur der Oberfläche des Meßkörpers unter Anwendung des Wienschen Verschiebungsgesetzes

2. Verfahren nach Anspruch 1, dadurch gekennzeichnet, daß zur Messung der von der Oberfläche emittierten Strahlendichte gegebenenfalls ein beliebiges IR-Spektrometer verwendet wird.

3. Verfahren nach Anspruch 1 und 2, dadurch gekennzeichnet, daß der emittierte Meßkörper die Strahlungsquelle des IR-Spektrometers ist.

4. Verfahren nach Anspruch 1, 2 und 3, dadurch gekennzeichnet, daß beim Vorhandensein einer Wellenlängenabhängigkeit des Emissionskoeffizienten, diese mit Hilfe eines Iterationsverfahrens aus der gemessenen Spektraldichte und der Spektraldichte eines schwarzen Körpers ermittelt wird.

Fig. 1

**Europäisches Patentamt**

# EUROPÄISCHER RECHERCHENBERICHT

Nummer der Anmeldung

EP 98 10 8737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | TSAI B K ET AL: "APPLICATION OF DUAL-WAVELENGTH RADIATION THERMOMETRY TO THE ALUMINUM INDUSTRY" MEASUREMENT, Bd. 11, Nr. 3, 1. Juni 1993, Seiten 211-221, XP000396976 * das ganze Dokument * | 1-4 | G01J5/60 |
| A | PATENT ABSTRACTS OF JAPAN vol. 9, no. 327 (P-415) [2050] , 21. Dezember 1985 -& JP 60 152924 A (NIPPON SHINKU GIJUTSU K.K.), 12. August 1985 * das ganze Dokument * | 1-4 | |
| A | P.M. REYNOLDS: "A REVIEW OF MULTICOLOUR PYROMETRY FOR TEMPERATURES BELOW 1500° C" BRIT.J.APPL.PHYSICS, Bd. 15, 1964, Seiten 579-589, XP002074447 * Seite 584 * | 1-4 | |
| A | A. SUZUKI E.A.: "TWO-COLOR RADIATION PYROMETRY: THEORY, PRACTICE AND APPLICATION" ADVANCES IN INSTRUMENTATION., Bd. 33, Nr. 1, 1978, Seiten 403-412, XP002074448 RESEARCH TRIANGLE PARK US * das ganze Dokument * | 1-4 | RECHERCHIERTE SACHGEBIETE (Int.Cl.6) G01J |

Der vorliegende Recherchenbericht wurde für alle Patentansprüche erstellt

| Recherchenort | Abschlußdatum der Recherche | Prüfer |
|---|---|---|
| DEN HAAG | 13. August 1998 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument